# EUROPÄISCHE PATENTSCHRIFT

(11) **EP 1 263 579 B1**
(45) Veröffentlichungstag und Bekanntmachung des Hinweises auf die Patenterteilung: **13.08.2003**
(21) Anmeldenummer: 01913368.5
(22) Anmeldetag: 14.03.2001
(51) Int. Cl.: B32B 25/04, A43B 7/32, A43B 13/12, A43B 13/38, F41H 5/04

(54) **MEHRSCHICHTMATERIAL ZUM SCHUTZ VON KÖRPERTEILEN**
MATERIAL CONSISTING OF SEVERAL LAYERS FOR PROTECTING PARTS OF THE BODY
MATERIAU MULTICOUCHE POUR LA PROTECTION DE PARTIES DU CORPS

(30) Priorität: 14.03.2000 AT 4172000
(43) Veröffentlichungstag der Anmeldung: 11.12.2002
(73) Patentinhaber: Astron Elastomerprodukte Gesellschaft mbH, 1231 Wien (AT)
(72) Erfinder: KARALL, Gerhard, A-2620 Neunkirchen (AT)
(74) Vertreter: Heger, Georg, Dipl.-Ing., Dr.
(86) Internationale Anmeldenummer: AT0100071
(87) Internationale Veröffentlichungsnummer: WO01068361

(56) Entgegenhaltungen:
- EP-A- 0 564 249
- EP-A- 0 578 255
- US-A- 5 887 453
- US-A- 5 979 081

## Beschreibung

Die Erfindung betrifft ein Mehrschichtmaterial zum Schutz von Körperteilen vor eindringenden Gegenständen, wie zum Beispiel Geschoße oder Splitter nach dem Oberbegriff des Patentanspruchs 1 sowie eine Schutzeinlage für Schuhe, einen Schutzschuh und eine Schutzoberbekleidung unter Verwendung eines solchen Mehrschichtmaterials.

In vielen Bereichen ist ein Schutz von Körperteilen vor eindringenden Gegenständen zweckmäßig. Beispielsweise sind beim Dachdecken oder bei der Feuerwehr Vorrichtungen zum Schutz der Füße, insbesondere der Fußsohle vor den Schuh durchdringenden Gegenständen zweckmäßig bzw. vorgeschrieben. In einschlägigen Normen (beispielsweise der prEN ISO 20344) wird die Durchtrittsicherheit bei Schuhwerk definiert und mit einem Grenzwert für die Penetrationskraft mit 1100 N festgelegt.

Bekannte Schutzeinlagen für Schuhe schützen die Fußsohle und bzw. oder den Zehenbereich des Fußes. Die entsprechenden Schutzeinlagen beinhalten dabei meist eine Metallsohle, welche das Durchdringen von spitzen oder scharfen Gegenständen, wie zum Beispiel Nägel oder Splitter, wirkungsvoll verhindert. Derartige im Sohlenaufbau integrierte Teile aus beispielsweise Federstahlblech erhöhen jedoch das Gewicht des Schuhs und senken wegen der eingeschränkten Flexibilität den Tragekomfort. Aus diesem Grund werden derartige Schuhe oder Schuheinlagen von vielen Berufsgruppen nicht akzeptiert. Durch Maßnahmen, welche den Tragekomfort erhöhen, wie beispielsweise Unterbrechungen in der Metallsohle wird der Schutz reduziert, da zwischen den einzelnen Metallteilen Gegenstände die Sohle durchdringen können.

Beispielsweise wird in der US 5 996 257 A eine durchtrittsichere Schuheinlage beschrieben, welche eine Kunststoffschicht mit Metalleinlagen umfasst. Die Metalleinlagen bewirken eine relativ hohe Steifheit der Sohle. Darüberhinaus bereitet die Anordnung der Metallpatten mit dem Schuhwerk oft Probleme.

Zur Erhöhung der Flexibilität beinhaltet die Konstruktion gemäß der US 4 888 888 A eine Schicht aus stabilem Material, beispielsweise Metall, welche aus einer Vielzahl von gelenkig miteinander verbundenen Einzelteilen besteht. Der Aufwand für die Herstellung einer derartigen Schutzsohle ist relativ hoch.

Die EP 0 667 108 A1 beschreibt beispielsweise'eine durchtrittssichere Sohle für Schuhwerk, welche die Kombination einer Schutzschicht aus Kunststoff mit einem flexiblen Vorderteil umfasst, welche an der Oberseite ein Futter aus Gewebe aufweist und an der Unterseite mit einer weiteren Schicht verbunden ist. Die Schutzschicht ist beispielsweise aus Polyamid im Spritzgussverfahren hergestellt. Derartige Sohlen sind relativ steif. Zur Erhöhung der Beweglichkeit wird die Dicke der Kunststoffschicht reduziert, wodurch natürlich die Schutzwirkung reduziert wird.

Einen anderen Einsatzbereich stellen Schutzschuhe dar, insbesondere solche, gegen Personenminen, welche von gefährdeten Personen, insbesondere während der Räumung von Minenfeldern, getragen werden. Die Schutzschuhe sollen die Beine des Trägers weitgehend vor Verletzung und sogar Zerstörung schützen und einen Knochenbruch durch Energieeinwirkung tunlichst verhindern.

In zahlreichen Staaten der Erde stellen Personenminen von Kriegsaktivitäten aus der Vergangenheit ein großes Problem dar. Derartige Personenminen sind sehr billig, einfach zu verwenden und sehr schwer zu entdecken und haben verheerende Auswirkungen auf Menschen im Falle ihrer Detonation. Durch den häufig auftretenden Verlust von Gliedmaßen ist eine lange Rehabilitation der Betroffenen erforderlich, was durch den Spitals- oder Rehabilitationsaufenthalt und die Anfertigung von Prothesen auch eine enorme finanzielle Belastung für den Betroffenen bzw. für den Staat darstellt. Derzeit sind weltweit große Bestrebungen im Gange, derartige Staaten bzw. Landstriche von Minen zu befreien. Für die Personen, welche diese Tätigkeit ausführen, gibt es derzeit unzureichenden Schutz vor einer Zerstörung oder Verletzung der Beine. Derzeit verfügbare Schutzschuhe weisen meist nur sehr unzureichenden Tragekomfort oder sehr komplexe Konstruktion und dadurch teure Herstellung auf, und weisen darüber hinaus eine unzureichende Schutzwirkung auf.

Die US 5 926 977 A beschreibt einen Schutzschuh mit mehrschichtigem Aufbau, welcher durch die Verwendung ausgewählter Materialien, die durch die Landmine ausgehende Explosionsenergie verteilt und aufnimmt und dadurch das Risiko einer Verletzung der Beine des Trägers des Schutzschuhes weitgehend reduziert. Die Konstruktion zeichnet sich durch ein relativ niedriges Gewicht, hohen Tragekomfort und billige Herstellung sowie hohe Sicherheit aus. Gemäß einer bevorzugten Ausführungsform des Schutzschuhes umfasst dieser eine Innenschicht und eine Außenschicht sowie eine allfällige Sohle aus Gummi. Die Innenschicht und die Außenschicht bestehen wiederum aus schichtweisem Aufbau verschiedener Materialien. Die Innenschicht besteht aus zumindest einer Schicht aus einem zusammenpressbaren, stoßabsorbierenden und möglichst leichten Material, welche durch zwei Schichten umgeben ist, von welcher zumindest eine wasserundurchlässig und die andere durchschlagssicher ausgebildet ist. Die mittlere Lage sowie die äußeren beiden Lagen dieser inneren Schicht sind vorzugsweise wiederum aus mehreren Lagen aufgebaut. Zumindest eine der Schichten ist aus einem flexiblen, wärmebeständigen, korrosionsbeständigen Material, wie z.B. Glasfaser oder Keramikfaser, aufgebaut. Zum Aufbau der durchschlagssicheren Schicht wird beispielsweise Kevlar® erwähnt. Gemäß einer anderen Ausführungsform besteht die Schutzeinrichtung aus einer schachtelförmigen Umhüllung, in welche der Träger seinen Fuß durch einen oben angeordneten Schlitz einbringt. Derartige Konstruktionen weisen allerdings relativ niedrigen Tragekomfort auf und eignen sich nicht zum Tragen über längere Zeiträume. Dadurch wird aber wiederum die Akzeptanz der Schutzschuhe reduziert und dadurch das Risiko einer Verletzung erhöht. Die Schutzschichten sind relativ dick (typischerweise im Bereich einiger Zentimeter), wodurch der Tragekomfort deutlich reduziert wird. Gemäß Beispiel 1 dieser Patentschrift schützt der Schuh vor Personenminen mit einer Ladungsgröße bis 150 g mit geringfügiger Zerstörung der Beine. Allerdings wird erwähnt, dass geringfügigere Verletzungen, wie Quetschungen oder Brüche, auftreten können.

Eine weitere Ausführungsform eines Schutzschuhes gegen Antipersonenminen ist in der US 5 992 056 A geoffenbart. Diese Konstruktion weist eine Einlegesohle auf, welche in einen herkömmlichen Schuh einsetzbar ist. Die Sohle besteht aus einer Vielzahl von Lagen aus sehr widerstandsfähigen Materialien, wie z.B. Gewebe aus Kevlar® oder Spektra®. Derartige Konstruktionen weisen zwar höheren Tragekomfort auf, bieten allerdings unzureichende Sicherheit.

Eine weitere Ausführungsform eines Minenschutzschuhes ist in der GB 2 178 296 A geoffenbart, welche aus einer Vielzahl von aufblasbaren Luftkissen besteht, welche mit einer stabilen Platte verbunden sind, die an die Sohle eines Schuhes befestigt wird. Jedes der Luftkissen kommuniziert zumindest mit einem anderen Kissen, so dass im Falle einer Explosion einer Landmine eine Verteilung der Energie über die gesamte Schutzschicht erfolgt. Derartige Konstruktionen weisen extrem niedrigen Tragekomfort und auch reduzierte Sicherheit auf.

Als weiteres Einsatzgebiet wären Schutzwesten, insbesondere kugelsichere Schutzwesten zu nennen. Übliche Konstruktionen bestehen meist aus mehreren Schichten aus besonders dichtem Aramidfasergewebe. Beispielsweise beschreibt die US 5 960 470 A eine derartige kugelsichere Schutzweste. Eine verbesserte Konstruktion einer Schutzbekleidung ist in der US 6 000 055 A beschrieben, bei der zwischen einzelnen Gewebs- oder Gelegsschichten Lagen aus thermoplastischem Material angeordnet werden.

Die GB 2 124 887 A beschreibt ein Mehrschichtmaterial für die Verwendung in einem Protektor zum Schutz vor Geschoßen, bei dem in Auftreffrichtung des Geschoßes gesehen zuerst eine wasserdichte Schicht, danach mehrere Plastikschichten, gefolgt von einigen miteinander vernähten Aramid-Gewebeschichten, gefolgt von weiteren Aramid-Gewebeschichten und einer Filzschicht angeordnet sind. Durch einen derartigen Schichtaufbau sind für eindringende Geschoße jedoch nur unzureichend hohe Durchtrittskräfte zu überwinden.

Die EP 564 249 A1 beschreibt ein Material der gegenständlichen Art zum Schutz von Körperteilen vor Stößen, welches aus einer Schicht eines synthetischen Polymers, wie z.B. Polyurethan, Polyethylen oder Polypropylen und einer inneren energieverteilenden Schicht aus einer dreidimensionalen Matrix auf Basis von Polynorbonen besteht.

Die WO 97/43919 A1 zeigt einen Minenschutz-Schuh, dessen Sohle aus mehreren Schichten Aramidgewebe, Carbonfasergewebe bzw. Gewebe aus keramischen Fasern oder Glasfasern und einer weiteren Kompositschicht aus gewebten Aramidfasern und Carbonfasern, welche in einen Polymerkleber eingebettet sind, besteht. Eine Umhüllung des Oberschuhs zwischen der äußeren und der inneren Lederschicht besteht aus zumindest einer Schicht eines Gewebes aus keramischen oder glaskeramischen Fasern und zumindest einer Schicht aus Aramidgewebe. Genauere Angaben über die energieaufnehmende Schutzschicht werden in diesem Dokument nicht geoffenbart.

Die DE 44 02 465 C1 beschreibt eine Vorrichtung zum Personenschutz in Minenfeldern, die einen Unterbau für ein Schuhwerk aufweist, der zumindest eine Schicht aus einem Dämpfungsmaterial, beispielsweise Polyethylenschaum und zumindest eine Schicht zum Abfangen von Splittern, beispielsweise aus faserverstärkten Kunststoffen, wie Polyethylen mit Glasfasergewebe, besteht.

Aus der EP 877 223 A2 ist eine Minen-Schutzeinrichtung bekannt, welche aus einem hohler Körper besteht, der beispielsweise einen dreieckförmigen Querschnitt besitzt und mit festem, flüssigem oder gasförmigem Stoff gefüllt ist. Der Körper kann ein Ventil enthalten, über welches ein Teil der von einer Druckwelle herrührenden Energie entladen werden kann. Die Oberflächen des Körpers können aus einer biegsamen oder festen Verstärkungsschicht bestehen.

Schließlich zeigt die WO 00/41583 A1 eine durchtrittssichere Schuhsohle, welche aus einer Vielzahl von Gewebeschichten besteht, zwischen welchen eine Matrix angeordnet ist, welche dazu dient, die Gewebeschichten zusammenzuhalten und die Verschiebbarkeit der einzelnen Fasern der Gewebeschichten zu beschränken. Als Material für diese Zwischenschicht wird bevorzugter Weise Polyethylen verwendet. Die übliche Dicke der Zwischenschicht wird mit 6,5 bis 100 µm angegeben, weshalb die Zwischenschicht nicht als energieaufnehmende Schicht angesehen werden kann.

Die Aufgabe der vorliegenden Erfindung besteht darin, ein Mehrschichtmaterial der oben angegebenen Art zu schaffen, durch welches eine gute Schutzwirkung für verschiedene Anwendungen, bei gleichzeitiger hoher Elastizität des Materials erzielt werden kann. Die Herstellung des Materials soll möglichst einfach sein und die Nachteile bekannter Materialien für Schutzeinrichtungen sollen vermieden oder zumindest reduziert werden.

Gelöst wird die erfindungsgemäße Aufgabe dadurch, dass eine weitere energieaufnehmende Schicht aus geschäumten Elastomeren besteht. Die energieaufnehmende Schicht aus einer dreidimensionalen Matrix auf Basis von Polynorbonen, wie zum Beispiel Astrosorb®, zeichnet sich durch hohe Energieaufnahmefähigkeit und entsprechende Elastizität aus. Durch die weitere energieaufnehmende Schicht aus geschäumten Elastomeren wird die stoßabsorbierende Eigenschaft verbessert. Die energieverteilende Schicht verhindert durch ihre Festigkeitseigenschaften die unmittelbare Eindringung des Gegenstandes indem die von diesem ausgehende Energie möglichst breit verteilt wird. Dabei darf keine Dehnbarkeit gegeben sein, welche eine Aufnahme der Energie bewirken würde. Durch die Kombination der zumindest einen energieverteilenden Schicht mit der zumindest einen energieaufnehmenden Schicht wird das Energieniveau, ab dem der Gegenstand in das Material eindringt, und somit die Schutzwirkung erhöht. Polynorbonen weist durch seine spezielle Molekularstruktur eine hohe Füllbarkeit mit verschiedensten Füllstoffen, wie zum Beispiel speziellen Ölen, Silikaten etc. auf. Dadurch können, im Gegensatz beispielsweise zu Kautschuk wesentlich bessere physikalische Eigenschaften erzielt werden.

Zusätzlich kann eine energieaufnehmende Schicht aus geschäumten Elastomeren aus Nitril-PVC-Schaum oder geschäumten Polyolefinen bestehen. Derartige Materialien zeigen gute stoßabsorbierende Eigenschaften bei günstigen Herstellungs- und Verarbeitungskosten.

Vorteilhafterweise besteht die energieverteilende Schicht aus faser- bzw. gewebeverstärktem Kunststoff. Diese Gewebe oder Filze aus Fasern aller Art mit möglichst hoher Festigkeit verleihen dem Material die notwendige Formstabilität und bewirkt eine Verteilung der Energie eindringender Gegenstände. Als Gewebe kommen vorzugsweise Aramidgewebe zur Anwendung, welche zweckmäßigerweise für eine optimale Festigkeit möglichst hohe Schussanzahl aufweisen.

Um ein Verschieben der Schichten des Mehrschichtmaterials gegeneinander zu verhindern, können die Schichten miteinander fix, beispielsweise durch Kleben oder Vernähen verbunden sein. Eine Verbindung kann aber auch herstellungstechnisch durch Vulkanisieren oder Anspritzen erfolgen.

Zum Schutz der Anordnung bzw. zu dessen Stabilisierung, insbesondere wenn die Schichten untereinander nur lose verbunden sind, können die Schichten von einer Umhüllung aus geeignetem Material umgeben sein.

Durch die Einlagerung eines Granulats mit höherer Festigkeit in der energieaufnehmenden Schicht, wird beim Eindringen von Gegenständen ein Energieverbrauch durch Reibung des Gegenstands am Granulat erzielt. Somit resultiert ein optimaler Schutz vor Eindringen spitzer oder scharfer Gegenstände wobei gleichzeitig die Flexibilität des Mehrschichtmaterials erhalten bleibt.

Gemäß einem weiteren Erfindungsmerkmal ist vorgesehen, dass das Granulat aus Siliziumkarbid besteht. Abgesehen von derartigen keramischen Werkstoffen können auch andere Materialien für das Granulat zum Einsatz kommen.

Um eine möglichst hohe Sicherheit gegen das Eindringen insbesondere spitzer und scharfer Gegenstände zu erzielen, ist vorgesehen, dass der Volumsanteil des Granulats in der energieaufnehmenden Schicht zumindest 30% beträgt.

Die Schutzwirkung wird dadurch erhöht, dass abwechselnd mehrere energieverteilende und energieaufnehmende Schichten angeordnet sind.

Gelöst wird die erfindungsgemäße Aufgabe auch durch eine Schutzeinlage, insbesondere Einlegesohle für Schuhe, welche durch einen Aufbau mit einem oben beschriebenen Mehrschichtmaterial gekennzeichnet ist. Dadurch kann die Fußsohle optimal vor Verletzung durch eindringende spitze oder scharfe Gegenstände geschützt werden.

Wenn dabei zumindest ein seitlicher Lappen im Mittelfußbereich randseitig mit dem Mehrschichtmaterial verbunden ist, kann neben der Fußsohle auch die häufig gefährdete seitliche Region des Mittelfußes entsprechend geschützt werden. Durch weitere Lappen aus dem Mehrschichtmaterial gemäß obiger Beschreibung können weitere Zonen, wie zum Beispiel die Ferse geschützt werden. Der oder die Lappen sind mit der Sohle vorteilhafterweise einstückig hergestellt. Durch die Verwendung des erfindungsgemäßen Materials ist eine dreidimensionale Gestaltung der Schutzeinrichtung möglich. Die Schutzeinlage kann in einen Schuh eingelegt oder auch in einem Schuh integriert sein.

Darüber hinaus wird die erfindungsgemäße Aufgabe durch einen Schutzschuh, insbesondere Minenschutzschuh mit einer allenfalls verstärkten Laufsohle gelöst, bei welchem oberhalb der Laufsohle zumindest teilweise ein oben beschriebenes Mehrschichtmaterial angebracht ist. Durch die erfindungsgemäße Kombination der Schichtmaterialien kann ein optimaler Schutz des Fußes bzw. Beines vor Verletzung und Zerstörung durch explodierende Minen oder anderer Einwirkungen erzielt werden. Neben der Anwendung für gefährdete Personen in verminten Gebieten sind beispielsweise auch Schutzschuhe für Fallschirmspringer zu erwähnen. Die Verwendung des erwähnten Mehrschichtmaterials für einen Minenschutzschuh bietet hohe Sicherheit und verhindert nicht nur eine Zerstörung des Beines sondern auch dessen Bruch durch Energieeinwirkung einer explodierenden Mine. Angestrebt wird ein absoluter Verletzungsschutz bei Personenminen mit einer Ladungsgröße bis 50 g Sprengstoff. Darüber hinaus ist auch ein sehr hoher Tragekomfort gegeben, so dass die Schutzschuhe von den Trägern akzeptiert und somit ständig während des gefährlichen Dienstes getragen werden.

Vorteilhafterweise ist die energieaufnehmende Schicht 10-14 mm, vorzugsweise 12 mm stark. Eine derartige Stärke bietet einen optimalen Schutz und garantiert gleichzeitig eine ausreichende Beweglichkeit und somit einen hohen Tragekomfort. Versuche haben gezeigt, dass bei einer Lagenstärke von 12 mm Astrosorb® 18 eine eingebrachte Energie von 220 J auf eine übertragbare Kraft von kleiner 35 kN reduziert.

Optimale Ergebnisse für einen Minenschutzschuh werden erreicht, wenn das Mehrschichtmaterial aus zumindest vier energieverteilenden Schichten und zumindest drei zwischen diesen energieverteilenden Schichten angeordneten energieaufnehmenden Schichten besteht.

Zur weiteren Erhöhung der Sicherheit des Beines des Trägers kann ein Innenschuh aus faser- bzw. gewebeverstärktem Material vorgesehen sein.

Wenn dabei der Innenschuh mit einer Laufsohle versehen ist, kann dadurch ein eigener Schuh geschaffen werden, welcher beispielsweise im Innendienst bzw. bei Verrichtung ungefährlicher Tätigkeiten getragen werden kann. Im Falle der Verrichtung gefährlicher Tätigkeiten, wie der Entfernung von Landminen, wird der Überschuh, umfassend die energieverteilende und energieabsorbierende Schicht sowie die Laufsohle, übergezogen.

Um einen noch größeren Schutz des Fußes zu erzielen, ist das Mehrschichtmaterial vorteilhafterweise seitlich der Laufsohle bis zu einer Höhe von vorzugsweise 5 bis 6 cm hochgezogen.

Gelöst wird die erfindungsgemäße Aufgabe auch durch eine Schutzoberbekleidung, insbesondere Schutzweste mit einem oben beschriebenen Mehrschichtmaterial. Eine derartig ausgeführte Oberbekleidung zeichnet sich durch hohe Schutzwirkung und gleichzeitig hohen Tragekomfort aus.

Die vorliegende Erfindung wird an Hand der Zeichnungen, welche verschiedene Ausführungsbeispiele der Erfindung zeigen, noch weiter erläutert. Darin zeigen:
Fig. 1 eine Draufsicht auf eine Schutzeinlage in Form einer Schuhsohle;
Fig. 2 einen Schnitt durch die Schutzeinlage gemäß Fig. 1 entlang der Schnittlinie II-II;
die Fig. 3 und 4 perspektivische Ansichten weiterer Ausführungsformen der Schutzeinlage für Schuhe; und
Fig. 5 eine Anwendung der Erfindung in einem Minenschutzschuh.

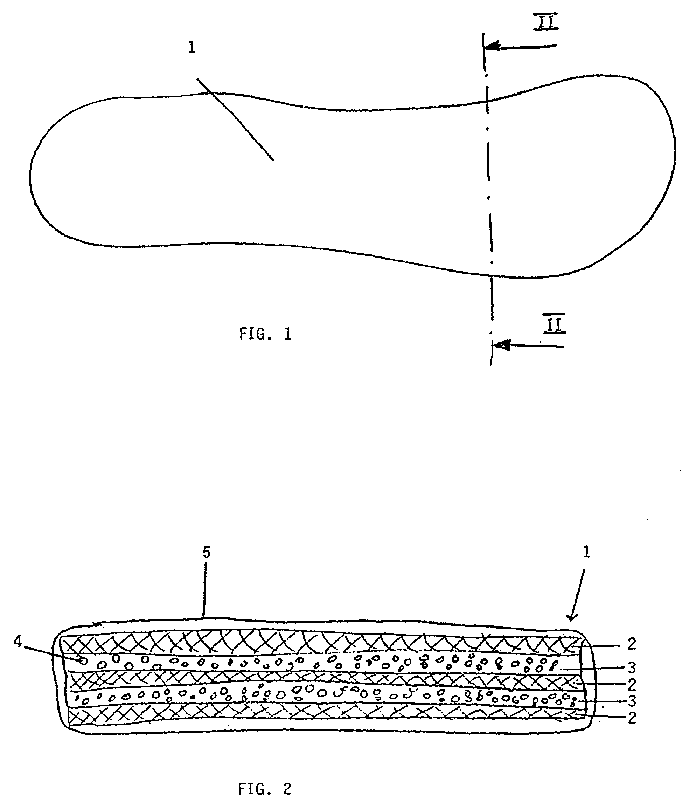

Fig. 1 zeigt eine Schutzeinlage 1 in Form einer Schuhsohle, welche in einen Schuh eingelegt oder im Schuh integriert sein kann und aus dem erfindungsgemäßen Mehrschichtmaterial aufgebaut ist.

Das Schnittbild der Schutzeinlage 1 entlang der Schnittlinie II-II gemäß Fig. 1 zeigt eine Ausführungsform der Erfindung, bestehend aus einer Vielzahl von aufeinanderfolgenden energieverteilenden Schichten 2 und energieaufnehmenden Schichten 3. In den energieaufnehmenden Schichten 3 kann ein Granulat 4 eingelagert sein. Die Schichten 2, welche vorteilhafterweise aus Fasergewebe, beispielsweise aus Aramidgewebe bestehen, verleihen der Schutzeinlage 1 die entsprechende Formstabilität und Festigkeit gegen Durchdringung spitzer und scharfer Gegenstände. Dabei weist das Gewebe eine möglichst hohe Schusszahl auf. Zumindest eine energieaufnehmende Schicht 3 besteht erfindungsgemäß aus einer Matrix auf Basis von Polynorbonen. Bei der Verwendung eines Aramidgewebes als energieverteilende Schicht 2 und Polynorbonen als energieaufnehmende Schicht 3 kann im Zuge eines Vulkanisierungsprozesses das Aramidgewebe vom Verbund der Polynorbonen-Matrix durchtränkt bzw. durchdrungen und somit eine sichere Verbindung der Schichten 2, 3 erzielt werden. Die Sicherheit vor eindringenden Gegenständen wird durch eingelagertes feinkörniges Granulat 4 erhöht. Durch das Granulat 4, welches vorteilhafterweise aus Siliziumkarbid (Korund) oder ähnlichen Werkstoffen besteht, wird die Energie eines, in das Mehrschichtmaterial eindringenden Gegenstandes durch Reibung verbraucht und somit ein Durchdringen des Gegenstandes und eine Verletzung des Fußes wirkungsvoll verhindert. Für ausreichende Reibung ist ein Volumsanteil von mindestens 30% des Granulats 4 in der Schicht 3 zweckmäßig. Bei optimaler Schutzwirkung bleibt dennoch die Elastizität der Schutzeinlage 1 durch die erfinderische Materialkombination gegeben. Die Schutzeinlage 1 umfasst vorzugsweise insgesamt vier Schichten. Zusätzlich können die Schichten 2, 3 von einer Umhüllung 5 umgeben sein. Die erwähnte Normvorschrift bei Schutzschuhen für Dachdecker od. dgl. wird beispielsweise durch eine vierlagige Schutzeinlage 1 mit einer Gesamtdicke von 3,5 mm erfüllt.

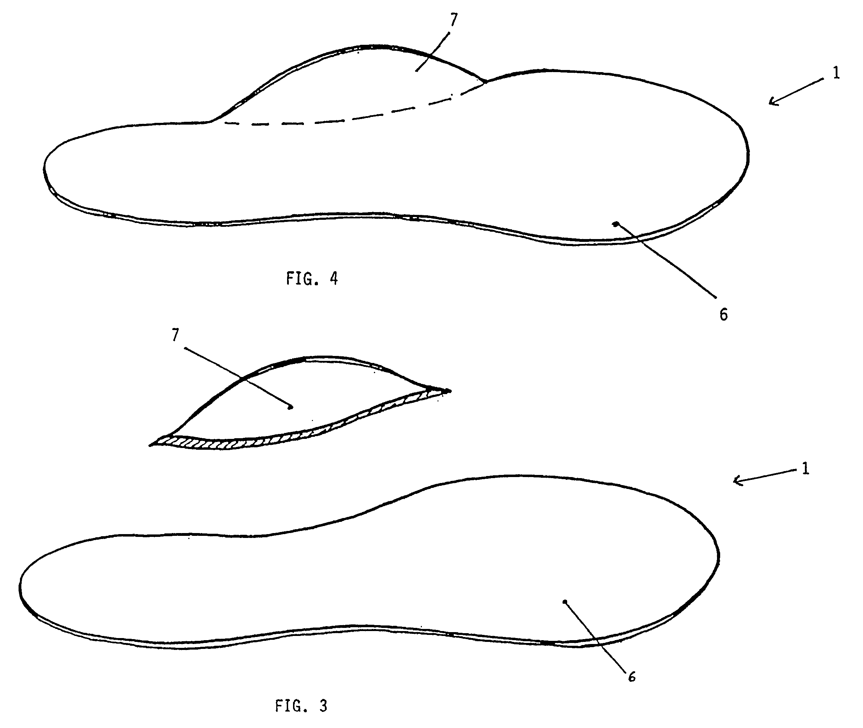

Fig. 3 zeigt eine Ausführungsform der Erfindung in perspektivischer Darstellung, bei der die Schutzeinlage 1 mit dem erfindungsgemäßen Mehrschichtmaterial die Form einer Sohle 6 und eines Lappens 7 aufweist. Der Lappen 7 kann zum Schutz des inneren, seitlichen Mittelfußbereichs dienen und im Schuh entsprechend angeordnet und evtl. befestigt oder bei der Herstellung des Schuhs eingebaut werden.

Bei der Variante entsprechend Fig. 4 ist der Lappen 7 mit der Sohle 6 fix verbunden, beispielsweise verklebt oder vernäht. Die Sohle 6 und der Lappen 7 können auch in einem Arbeitsvorgang einstückig hergestellt werden. Durch die erfindungsgemäße Materialkombination der energieverteilenden Schichten 2 und der energieaufnehmenden Schichten 3 ist eine dreidimensionale Gestaltung der Schutzeinlage 1 für Schuhe möglich, welche bei bisherigen Konstruktionen unmöglich oder nur begrenzt möglich gewesen sind. Die Schutzeinlage 1 gemäß der vorliegenden Erfindung ist relativ kostengünstig herstellbar und dadurch ein Schuh leicht und billig zu einem Sicherheitsschuh umrüstbar. Durch den Erhalt der Elastizität der Schutzeinlage 1 wird eine hohe Akzeptanz erzielt.

Eine Anwendung der erfindungsgemäßen Schutzeinlage für Schuhe ist nicht nur für Dachdecker oder Feuerwehrleute sondern auch für Bauarbeiter oder Personen, welche mit der Beseitigung von Sprengkörpern beschäftigt sind, denkbar.

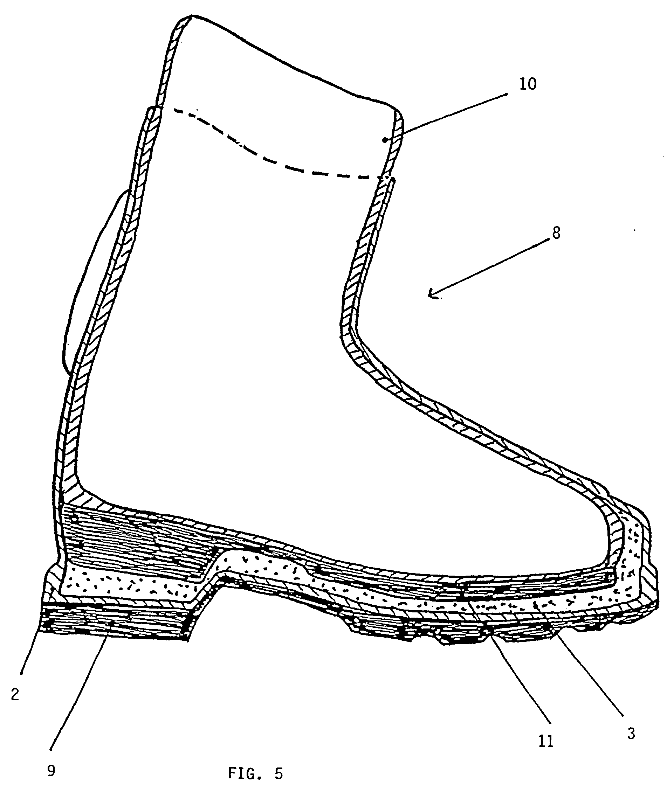

Fig. 5 zeigt eine solche Anwendung des erfindungsgemäßen Mehrschichtmaterials, bei einem Schutzschuh 8, insbesondere Minenschutzschuh. Der Schutzschuh 8 gegen Personenminen besteht aus einer Laufsohle 9, welche in herkömmlicher Weise aus Gummi, allenfalls mit einer Verstärkung, beispielsweise aus Stahlblech, versehen ist. Erfindungsgemäß ist der Schutzschuh 8 mit einer energieverteilenden Schicht 2 versehen, welche vorzugsweise aus faser- bzw. gewebeverstärktem Kunststoff besteht. In Auftreffrichtung eines eindringenden Gegenstandes gesehen hinter der energieverteilenden Schicht 2 ist eine energieaufnehmende Schicht 3 aus einer Matrix auf Basis von Polynorbonen angeordnet. Geeignete handelsübliche Materialien sind beispielsweise Astrosorb® oder Memory®. Anstelle der dargestellten Schichten 2, 3 können auch mehrere abwechselnd angeordnete Schichten 2, 3 in entsprechenden Dicken vorgesehen sein. Die zumindest eine energieverteilende Schicht 2 dient dazu, die gerichtete Explosionsenergie, welche von der Landmine oder einer anderen Energiequelle ausgeht, zu verteilen und dadurch den spezifischen Druck zu reduzieren. Die energieaufnehmende Schicht 3, bzw. mehrere derartige Schichten, dienen zur Absorbierung der Energie, welche durch die Schicht 2 in verteilter Form hindurch geht und zur Umwandlung der Energie, beispielsweise in Wärme. Dadurch wird die Energie, welche auf den Fuß wirkt, wesentlich reduziert, wobei Werte unter 35 kN angestrebt werden. Durch verschiedene Kombinationen von Materialien und mehrlagigem Schichtenaufbau kann die Wirkung weiters gesteigert werden. Vorzugsweise ist im Inneren des Schutzschuhes 8 ein Innenschuh 10 angeordnet, welcher aus Leder oder wiederum aus faser- bzw. gewebeverstärktem Material aufgebaut sein kann. Wenn der Innenschuh 10 über eine eigene Laufsohle 11 verfügt, kann dieser auch getrennt vom Schutzschuh 8 als voll funktionsfähiger Schuh, beispielsweise bei ungefährlichen Tätigkeiten oder im Innenbereich eingesetzt werden. In gefährlichem Bereich wird der Außenschuh angezogen und dadurch dem Träger ein optimaler Schutz gegen Personenminen geboten. Obgleich hauptsächlich auf Schutzschuhe gegen Personenminen eingegangen wird, kann der erfindungsgemäße Schutzschuh 8 ebenfalls für andere Einsätze, wie z.B. als Schuh für Fallschirmspringer bzw. als Schutzschuh für Personen, welche höheren Gefahren durch Schläge oder Stöße auf die Füße ausgesetzt sind, angewendet werden. Darüber hinaus ist eine Anwendung des erfindungsgemäßen Materials auch bei Hochalpinschuhen möglich.

## Patentansprüche

1. Mehrschichtmaterial zum Schutz von Körperteilen vor eindringenden Gegenständen, wie zum Beispiel Geschoße oder Splitter, mit zumindest einer energieverteilenden Schicht und zumindest einer energieaufnehmenden Schicht, wobei die in Auftreffrichtung des Gegenstandes gesehen hinter einer energieverteilenden Schicht (2) angeordnete energieaufnehmende Schutzschicht (3) aus einer dreidimensionalen Matrix auf Basis von Polynorbonen besteht, **dadurch gekennzeichnet, dass** eine weitere energieaufnehmende Schicht (3) aus geschäumten Elastomeren besteht.

2. Mehrschichtmaterial nach Anspruch 1, **dadurch gekennzeichnet, dass** eine aus geschäumten Elastomeren bestehende energieaufnehmende Schicht (3) aus Nitril-PVC-Schaum oder geschäumten Polyolefinen besteht.

3. Mehrschichtmaterial nach einem der Ansprüche 1 bis 2, **dadurch gekennzeichnet, dass** die energieverteilende Schicht (2) aus faser- bzw. gewebeverstärktem Kunststoff besteht.

4. Mehrschichtmaterial nach Anspruch 3, **dadurch gekennzeichnet, dass** die energieverteilende Schicht (2) aus Aramidgewebe besteht.

5. Mehrschichtmaterial nach einem der Ansprüche 1 bis 4, **dadurch gekennzeichnet, dass** die Schichten (2, 3) miteinander fix verbunden sind, beispielsweise durch Kleben oder Vernähen.

6. Mehrschichtmaterial nach einem der Ansprüche 1 bis 5, **dadurch gekennzeichnet, dass** die Schichten (2, 3) von einer Umhüllung (5) umgeben sind.

7. Mehrschichtmaterial nach einem der Ansprüche 1 bis 6, **dadurch gekennzeichnet, dass** in der energieaufnehmenden Schicht (3) ein Granulat (4) eingelagert ist.

8. Mehrschichtmaterial nach Anspruch 7, **dadurch gekennzeichnet, dass** das Granulat (4) aus Siliziumkarbid besteht.

9. Mehrschichtmaterial nach Anspruch 7 oder 8, **dadurch gekennzeichnet, dass** der Volumsanteil des Granulats (4) in der energieaufnehmenden Schicht (3) zumindest 30% beträgt.

10. Mehrschichtmaterial nach einem der Ansprüche 1 bis 9, **dadurch gekennzeichnet, dass** abwechselnd mehrere energieverteilende Schichten (2) und energieaufnehmende Schichten (3) angeordnet sind.

11. Schutzeinlage, insbesondere Einlegesohle für Schuhe, **gekennzeichnet durch** einen Aufbau mit einem Mehrschichtmaterial nach einem der Ansprüche 1 bis 10.

12. Schutzeinlage nach Anspruch 11, **dadurch gekennzeichnet, dass** zumindest ein seitlicher Lappen (7) im Mittelfußbereich randseitig mit dem Mehrschichtmaterial verbunden ist.

13. Schutzschuh, insbesondere Minenschutzschuh mit einer allenfalls verstärkten Laufsohle (9), **dadurch gekennzeichnet, dass** oberhalb der Laufsohle (9) zumindest teilweise ein Mehrschichtmaterial gemäß einem der Ansprüche 1 bis 10 angebracht ist.

14. Schutzschuh nach Anspruch 13, **dadurch gekennzeichnet, dass** die energieaufnehmende Schicht (3) 10-14 mm, vorzugsweise 12 mm stark ist.

15. Schutzschuh nach Anspruch 13, **dadurch gekennzeichnet, dass** das Mehrschichtmaterial aus zumindest vier energieverteilenden Schichten (2) und zumindest drei zwischen diesen energieverteilenden Schichten (2) angeordneten energieaufnehmenden Schichten (3) besteht.

16. Schutzschuh nach einem der Ansprüche 13 bis 15, **dadurch gekennzeichnet, dass** ein Innenschuh (10) aus faser- bzw. gewebeverstärktem Material vorgesehen ist.

17. Schutzschuh nach Anspruch 16, **dadurch gekennzeichnet, dass** der Innenschuh (10) mit einer Laufsohle (11) versehen ist.

18. Schutzschuh nach einem der Ansprüche 13 bis 17, **dadurch gekennzeichnet, dass** das Mehrschichtmaterial seitlich der Laufsohle (9) bis zu einer Höhe von vorzugsweise 5 bis 6 cm hochgezogen ist.

19. Schutzoberbekleidung, insbesondere Schutzweste mit einem Mehrschichtmaterial gemäß einem der Ansprüche 1 bis 10.

## Claims

1. A multilayered material for the protection of body parts from penetrating objects, such as, e.g., projectiles or splinters, comprising at least one energy-distributing layer and at least one energy-absorbing layer, wherein the energy-absorbing protective layer (3), which, viewed in the direction of impact of the object, is arranged behind an energy-distributing layer (2), is made of a three-dimensional Polynorbonene-based matrix, **characterized in that** a further energy-absorbing layer (3) is made of foamed elastomers.

2. A multilayered material according to claim 1, **characterized in that** an energy-absorbing layer (3) made of foamed elastomers is made of nitrile-PVC foam or of foamed polyolefins.

3. A multilayered material according to any one of claims 1 to 2, **characterised in that** the energy-distributing layer (2) is made of a fiber- or fabric-reinforced synthetic material, respectively.

4. A multilayered material according to claim 3, **characterised in that** the energy-distributing layer (2) is made of an aramide fabric.

5. A multilayered material according to any one of claims 1 to 4, **characterised in that** the layers (2, 3) are fixedly interconnected, e.g. by gluing or sewing.

6. A multilayered material according to any one of claims 1 to 5, **characterised in that** the layers (2, 3) are surrounded by an envelope (5).

7. A multilayered material according to any one of claims 1 to 6, **characterised in that** granules (4) are embedded in the energy-absorbing layer (3).

8. A multilayered material according to claim 7, **characterised in that** the granules (4) consist of silicon carbide.

9. A multilayered material according to claim 7 or 8, **characterised in that** the volume portion of the granules (4) in the energy-absorbing layer (3) is at least 30%.

10. A multilayered material according to any one of claims 1 to 9, **characterised in that** several energy-distributing layers (2) and energy-absorbing layers (3) are alternatingly arranged.

11. A protective insert, in particular an insole for boots, **characterised by** a structure comprising a multilayered material according to any one of claims 1 to 10.

12. A protective insert according to claim 11, **characterised in that** at least one lateral lobe (7) in the metatarsal region is connected at the rim-side with the multilayered material.

13. A protective boot, in particular a mine-protection boot, comprising a possibly reinforced outsole (9), **characterised in that** above the outsole (9) at least partially a multilayered material according to any one of claims 1 to 10 is applied.

14. A protective boot according to claim 13, **characterised in that** the energy-absorbing layer (3) has a thickness of 10-14 mm, preferably 12 mm.

15. A protective boot according to claim 13, **characterised in that** the multilayered material is comprised of at least four energy-distributing layers (2) and at least three energy-absorbing layers (3) arranged between these energy-distributing layers (2).

16. A protective boot according to any one of claims 13 to 15, **characterised in that** an inner boot (10) of fiber- or fabric-reinforced material is provided.

17. A protective boot according to claim 16, **characterised in that** the inner boot (10) is provided with an outsole (11).

18. A protective boot according to any one of claims 13 to 17, **characterised in that** laterally of the outsole (9), the multilayered material extends upwards to a height of preferably 5 to 6 cm.

19. Protective outer garment, in particular protective vest, comprising a multilayered material according to any one of claims 1 to 10.

## Revendications

1. Matériau multicouche pour la protection de parties du corps vis-à-vis d'objets pénétrants, comme par exemple des projectiles ou des éclats de matériaux, comportant au moins une couche de répartition d'énergie et au moins une couche absorbant l'énergie, dans lequel la couche de protection d'absorption d'énergie (3) qui est disposée en arrière de la couche de répartition d'énergie (2), lorsqu'on regarde dans la direction d'impact de l'objet, est constituée d'une matrice tridimensionnelle à base de polynorbornène, **caractérisé en ce qu'**une autre couche (3) d'absorption d'énergie est constituée d'élastomères à l'état de mousse.

2. Matériau multicouche selon la revendication 1, **caractérisé en ce qu'**une couche (3) d'absorption d'énergie constituée d'élastomères à l'état de mousse est constituée d'une mousse de PVC-nitrile ou de polyoléfines à l'état de mousse.

3. Matériau multicouche selon l'une des revendications 1 à 2, **caractérisé en ce que** la couche (2) de répartition d'énergie est constituée d'une matière plastique renforcée par des fibres ou par un tissu.

4. Matériau multicouche selon la revendication 3, **caractérisé en ce que** la couche de répartition d'énergie (2) est constituée d'un tissu d'Aramide.

5. Matériau multicouche selon l'une des revendications 1 à 4, **caractérisé en ce que** les couches (2, 3) sont reliées entre elles de façon fixe, par exemple par collage ou couture.

6. Matériau multicouche selon l'une des revendications 1 à 5, **caractérisé en ce que** les couches (2, 3) sont entourées par une enveloppe (5).

7. Matériau multicouche selon l'une des revendications 1 à 6, **caractérisé en ce que** des granulés (4) sont insérés dans la couche d'absorption d'énergie (3).

8. Matériau multicouche selon la revendication 7, **caractérisé en ce que** les granulés (4) sont constitués de carbure de silicium.

9. Matériau multicouche selon la revendication 7 ou 8, **caractérisé en ce que** le pourcentage de volume des granulés (4) dans la couche d'absorption d'énergie (3) est égal à au moins 30 %.

10. Matériau multicouche selon l'une des revendications 1 à 9, **caractérisé en ce que** plusieurs couches de répartition d'énergie (2) et plusieurs couches d'absorption d'énergie (3) sont disposées de manière alternée.

11. Insert de protection, notamment semelle intercalaire pour chaussure, **caractérisé par** un agencement comprenant un matériau multicouche selon l'une des revendications 1 à 10.

12. Insert de protection selon la revendication 11, **caractérisé en ce qu'**au moins une patte latérale (7) est reliée au niveau de son bord au matériau multicouche dans la zone du milieu du pied.

13. Chaussure de protection, notamment chaussure de protection pour la mine, comportant une semelle éventuellement renforcée (9), **caractérisée en ce qu'**au-dessus de la semelle (9) est disposé au moins partiellement un matériau multicouche selon l'une des revendications 1 à 10.

14. Chaussure de protection selon la revendication 13, **caractérisée en ce que** la couche d'absorption d'énergie (3) a une épaisseur comprise entre 10 et 14 mm, et de préférence égale à 12 mm.

15. Chaussure de protection selon la revendication 13, **caractérisée en ce que** le matériau multicouche est constitué d'au moins quatre couches de répartition d'énergie (2) et d'au moins trois couches d'absorption d'énergie (3), disposées entre lesdites couches de répartition d'énergie (2).

16. Chaussure de protection selon l'une des revendications 13 à 15, **caractérisée en ce qu'**il est prévu une chaussure intérieure (10) formée d'un matériau renforcé par des fibres ou un tissu.

17. Chaussure de protection selon la revendication 16, **caractérisée en ce que** la chaussure intérieure (10) est pourvue d'une semelle (11).

18. Chaussure de protection selon l'une des revendications 13 à 17, **caractérisée en ce que** le matériau multicouche est relevé latéralement par rapport à la semelle (9) jusqu'à sur une hauteur comprise de préférence entre 5 et 6 cm.

19. Vêtement supérieur de protection, notamment gilet de protection, comportant un matériau multicouche selon l'une des revendications 1 à 10.
